# EUROPÄISCHE PATENTSCHRIFT

(11) **EP 3 184 951 B1**
(45) Veröffentlichungstag und Bekanntmachung des Hinweises auf die Patenterteilung: **14.11.2018**
(21) Anmeldenummer: 16203737.8
(22) Anmeldetag: 13.12.2016
(51) Int. Cl.: F41H 5/26, G02B 23/08

(54) **KLAPPWINKELSPIEGEL UND AUSBLICKVORRICHTUNG**
COLLAPSIBLE PERISCOPE AND VISION DEVICE
PÉRISCOPE RABATTABLE ET DISPOSITIF DE VISION

(30) Priorität: 21.12.2015 DE 102015122411
(43) Veröffentlichungstag der Anmeldung: 28.06.2017
(73) Patentinhaber: Krauss-Maffei Wegmann GmbH & Co. KG, 80997 München (DE)
(72) Erfinder: Stoiber, Wolfgang, 80997 München (DE); Schuhmann, Manfred, 80997 München (DE); Bandmann, Elmar, 80997 München (DE)
(74) Vertreter: Feder Walter Ebert

(56) Entgegenhaltungen:
- DE-T2- 69 824 931
- DE-U1-202010 008 150
- FR-A- 407 463
- US-A- 2 570 357

## Beschreibung

Die Erfindung betrifft einen Klappwinkelspiegel für ein militärisches Fahrzeug mit einem um eine Schwenkachse schwenkbaren Einblickspiegel, der insbesondere zwischen einer Einblickstellung und einer Parkstellung hin und her schwenkbar ist, und einer Abstrebung zur Festlegung der Stellung des Einblickspiegels, wobei die Abstrebung längenveränderbar ist. Ferner betrifft die Erfindung eine Ausblickvorrichtung mit einem Ausblickspiegel und einem Klappwinkelspiegel sowie ein Verfahren zur Betätigung eines Klappwinkelspiegels für ein militärisches Fahrzeug und ein Fahrzeug, insbesondere militärisches Fahrzeug, mit einer Ausblickvorrichtung.

Solche Vorrichtungen zur Beobachtung der Umgebung eines Fahrzeugs werden bevorzugt in militärischen und/oder gepanzerten Fahrzeugen eingesetzt. Sie ermöglichen es, die Fahrzeugumgebung aus dem geschützten Inneren des Fahrzeugs zu beobachten, so dass der entsprechende Beobachter das Fahrzeug weder verlassen noch seinen Kopf aus dem Fahrzeug strecken und sich damit einer Gefahr aussetzen muss.

Die wesentlichen Komponenten solcher Vorrichtungen, die oft auch als Winkelspiegel bezeichnet werden, weisen dafür zumeist einen außen am Fahrzeug angeordneten Ausblickspiegel und einen innerhalb des Fahrzeugs angeordneten Einblickspiegel auf. Zudem ist zwischen diesen beiden Spiegeln ein durchsichtiges Medium angeordnet, so dass Lichtstrahlen von dem Ausblickspiegel zum Einblickspiegel geleitet werden können. Die beiden Spiegel sind dabei derart zueinander angeordnet, dass auf den Ausblickspiegel einfallende Lichtstrahlen möglichst unter Totalreflexion zum Einblickspiegel ins Innere des Fahrzeugs geleitet werden, so dass die Umgebung entsprechend aus dem Innenraum beobachtet werden kann.

Der Einblickspiegel ist zumeist in Kopfhöhe einer sich im Fahrzeug befindlichen Person angeordnet, so dass diese die Umgebung aus ihrer Sitzposition beobachten kann. Da der Einblickspiegel mitunter viel Platz in Inneren des Fahrzeugs benötigt, hat es sich bewährt, den Einblickspiegel mit einer Mechanik auszustatten, die eine Klappbewegung des Spiegels ermöglicht. Durch diese Mechanik kann der Einblickspiegel von einer Einblickstellung, in der die Umgebung beobachtet werden kann, um eine Schwenkachse in eine Parkposition verschwenkt werden.

Ein solcher Klappwinkelspiegel ist beispielsweise in der DE 698 24 931 T2 beschrieben. Dieser Klappwinkelspiegel weist einen Einblickspiegel auf, der um eine Schwenkachse zwischen einer Einblickstellung und einer Parkstellung hin und her schwenkbar ist. Zur Festlegung der Spiegelposition ist der Einblickspiegel schwenkbeweglich mit einer länglichen Abstrebung verbunden, die an einem Ende in einer waagerecht angeordneten Linearführung geführt ist. Um den Spiegel in einer Einblickstellung zu fixieren, weist die Linearführung für jede Spiegelposition eine Vertiefung auf, in denen die Abstrebung einrasten kann, so dass eine Bewegung der Abstrebung verhindert und die Position des Einblickspiegels festgelegt ist.

Ein weiterer Klappwinkelspiegel ist beispielsweise aus der US 2,570,357 A bekannt, welcher einen um eine Schwenkachse schwenkbaren Einblickspiegel und eine längenveränderbare Abstrebung zur Festlegung der Stellung des Einblickspiegels aufweist.

Bei solchen Klappwinkelspiegeln hat es sich jedoch im Betrieb als nachteilig herausgestellt, dass die Linearführung fehleranfällig ist, beispielsweise kann es bei solchen Konstruktionen dazu kommen, dass die Abstrebung insbesondere bei Geländefahrten aus den Rasten springt oder sich in der Linearführung verkeilt.

Ausgehend von diesem Problem stellt sich die Erfindung die **Aufgabe**, einen Klappwinkelspiegel der eingangs genannten Art anzugeben, der auf zuverlässige Weise festgestellt werden kann.

Diese Aufgabe wird mit den Merkmalen des Patentanspruchs 1 **gelöst**. Weitere vorteilhafte Ausgestaltungen der Erfindung sind Teil der abhängigen Unteransprüche.

Die längenveränderbare Abstrebung ermöglicht eine zuverlässige Festlegung des Einblickspiegels in jeder Position. Die Position des Einblickspiegels ist von der Länge der Abstrebung abhängig, so dass durch Verstellen der Länge der Abstrebung, der Einblickspiegel um einen bestimmten Winkel um dessen Schwenkachse verschwenkt wird und verschiedene Positionen einnehmen kann. Wenn die Abstrebung fixiert und demnach nicht mehr längenveränderbar ist, kann auch der Einblickspiegel aufgrund seiner Bewegungsabhängigkeit nicht mehr verschwenkt werden.

Durch die erfindungsgemäße Abstrebung kann der Einblickspiegel auf konstruktiv einfache Weise in beliebig vielen Positionen fixiert werden, die nicht vorab festgelegt sein müssen. Beispielsweise kann der Einblickspiegel in eine erste Parkstellung überführt werden, in der er beispielsweise parallel und möglichst nahe am Dach des Fahrzeugs angeordnet sein kann. In dieser ersten Parkstellung wird der Einblickspiegel nicht verwendet und nimmt nur sehr wenig Platz im Fahrzeug ein, so dass die Bewegungsfreiheit bzw. die Sicht der sich im Fahrzeug befindlichen Personen wenig bzw. nicht beeinträchtigt ist. Der Einblickspiegel kann beispielsweise unter einer verschließbaren Luke angeordnet sein, so dass die Luke, wenn der Einblickspiegel sich in der ersten Parkposition befindet, geöffnet oder geschlossen werden kann. Der Einblickspiegel kann in eine zweite Parkposition verschwenkt werden, in der Zusatzgeräte wie beispielsweise ein Nachtsichtgerät zur Beobachtung der Umgebung eingesetzt werden können. Des Weiteren kann der Einblickspiegel auch in verschiedene Einblickstellungen verschwenkt werden, so dass der Einblickspiegel bzw. dessen Position auch an eine bestimmte Person angepasst sein kann und der erfindungsgemäße Klappwinkelspiegel auch von verschieden großen Personen verwendet werden kann. Der Einblickspiegel kann dabei bevorzugt zweiteilig ausgeführt sein. Der untere Teil kann bevorzugt den eigentlichen Spiegel aufweisen und insbesondere austauschbar ausgestaltet sein. Hierzu können beispielsweise flache Schrauben an dem unteren Teil vorgesehen sein, welche handfest mit dem oberen Teil des Einblickspiegels, welcher bevorzugt an dem Fahrzeug angeordnet werden kann, verschraubt werden können.

Hinsichtlich der Verbindung zwischen Einblickspiegel und Abstrebung hat es sich als vorteilhaft herausgestellt, wenn die Abstrebung schwenkbeweglich, insbesondere über ein Gelenkauge mit dem Einblickspiegel verbunden ist. Mittels einer solchen schwenkbeweglichen Verbindung wird erreicht, dass eine Längenänderung der Abstrebung eine Schwenkbewegung des Einblickspiegels bewirken kann. Bevorzugt ist die Abstrebung an einem ersten Ende schwenkbeweglich mit dem Einblickspiegel verbunden. Die Abstrebung kann seitlich mit dem Einblickspiegel verbunden sein, so dass die Abstrebung die Sicht auf den Einblickspiegel nicht behindert. Ferner ist es aufgrund des Gelenkauges auf einfache Weise möglich, dass die Abstrebung nicht senkrecht zum Einblickspiegel angeordnet sein muss, was hinsichtlich der Beeinflussung der Sicht durch die Abstrebung vorteilhaft ist. Das Gelenkauge der Abstrebung kann vorteilhafterweise geschlitzt ausgebildet sein, so dass bei einem Defekt des Einblickspiegels der untere Teil schnell ausgetauscht werden kann. Ferner ist es möglich, dass der Einblickspiegel mit zwei Abstrebungen verbunden ist, von denen eine an der einen Seite und die andere gegenüberliegend an der anderen Seite des Einblickspiegels angeordnet sein kann.

Weiterhin hat es sich als vorteilhaft herausgestellt, wenn die Abstrebung über einen Schwenkpunkt mit einem fahrzeugfesten Fixpunkt verbunden ist. Der fahrzeugfeste Fixpunkt kann unbeweglich am Fahrzeug angeordnet sein, so dass dieser für die Schwenkbewegung der Abstrebung einen Fixpunkt darstellt und sich die Abstrebung nur rotatorisch, jedoch nicht translatorisch zum Fahrzeug bewegen kann. Der Fixpunkt kann an einem Lagerblock angeordnet sein, der mit einem Ende der Abstrebung verbunden sein kann. Die Abstrebung kann an einem Ende einen Kugelkopf aufweisen, der in dem Lagerblock geführt ist. Der Lagerblock kann beabstandet zur Schwenkachse des Einblickspiegels angeordnet sein, was eine vorteilhafte Abstützung des Einblickspiegels erlaubt. Der Lagerblock kann, um die Sicht auf den Einblickspiegel möglichst nicht zu beeinträchtigen, insbesondere in Einblickrichtung seitlich unter einem Ausrückwinkel aus dem Einblicksichtfeld ausgerückt sein kann. Es ist möglich, dass an jeder Seite des Einblickspiegels ein Lagerblock angeordnet ist, an welchen jeweils eine Abstrebung schwenkbeweglich befestigt ist, so dass der Einblickspiegel an beiden Seiten mit einer Abstrebung verbunden sein kann. Vorteilhaft ist jeder Lagerblock aus dem Einblicksichtfeld ausgerückt, so dass keine Abstrebung die Sicht auf den Einblickspiegel behindert.

Ferner kann die Position des Fixpunktes oder des Lagerblocks variierbar sein. Durch die längenveränderbare und an beiden Enden schwenkbeweglich gelagerte Abstützung, kann die Position des fahrzeugfesten Fixpunktes bzw. des Lagerblocks dahingehend geändert werden, dass die Sicht auf den Einblickspiegel möglichst nicht beeinträchtigt ist. Der Lagerblock kann beispielsweise über Magnete lösbar mit dem Fahrzeug verbunden sein. Die Position des Lagerblocks und/oder des Fixpunktes kann in einer ersten Richtung und in einer zweiten Richtung variiert werden, wobei beide Richtungen senkrecht zueinander stehen und parallel zum Dach des Fahrzeugs verlaufen können. Eine solche Variabilität bietet insbesondere auch den Vorteil, dass die Position des Fixpunktes und des Lagerblocks an Störgeometrien wie beispielsweise Schalter oder Hebel angepasst sein kann, so dass eine Störung oder eine Behinderung vermieden werden kann.

Weiterhin hat es sich als vorteilhaft herausgestellt, wenn der Schwenkpunkt und die Schwenkachse beabstandet zueinander angeordnet sind. Durch diesen Abstand wird erreicht, dass die Abstrebung ein Drehmoment auf den Einblickspiegel in der Art bewirken kann, dass dieser in verschiedenen Einblickspiegelstellungen sicher abgestützt sein kann. Ferner können durch diesen Abstand die Positionen von Einblickspiegel und Abstrebung festgelegt sein. Es kann sich in einer Richtung eine dreiecksförmige Geometrie aus Abstrebung, Abstand zwischen Schwenkachse und Schwenkpunkt sowie Abstand zwischen Schwenkachse und Verbindungspunkt zwischen Abstrebung und Einblickspiegel ergeben. Die Länge des Abstandes zwischen Schwenkpunkt und Schwenkachse und die zwischen Schwenkachse und Verbindungspunkt können unveränderbar sein. Weiterhin ist es vorteilhaft, wenn die Abstrebung bzw. die Abstrebungslängsachse und die Schwenkachse des Einblickspiegels windschief zueinander angeordnet sind.

Bezüglich des Abstandes von Schwenkpunkt und Schwenkachse hat es sich als vorteilhaft herausgestellt, wenn dieser geringer ist als die Länge der Abstrebung. Durch diese konstruktive Ausgestaltung wird eine platzsparende Anordnung erreicht, da die Abstrebung nicht weit in den Raum zwischen Einblickspiegel und der entsprechenden Person im Fahrzeug hineinreicht.

Ferner hat es sich als vorteilhaft herausgestellt, wenn der Abstand von Schwenkpunkt und Schwenkachse, insbesondere beim Verschwenken des Einblickspiegels konstant ist. Dadurch wird erreicht, dass Einblickspiegel und Abstrebung fest definierte Positionen aufweisen.

Aus konstruktiver Hinsicht hat sich weiterhin ergeben, dass der zwischen dem Einblickspiegel und der Abstrebung eingeschlossene Schwenkwinkel kleiner als 90°, bevorzugt kleiner als 45°, und besonders bevorzugt kleiner als 20° ist. Aufgrund dieses kleinen Schwenkwinkels liegen die Abstrebung und der Einblickspiegel nahe beieinander, so dass der im Fahrzeuginnenraum benötigte Platz gering ist. In der ersten Parkstellung kann der Schwenkwinkel beispielsweise 0° betragen, so dass dann die Abstrebung und der Einblickspiegel miteinander fluchten. In dieser Stellung können beide Elemente parallel zum Dach des Fahrzeugs angeordnet sein. In der Einblickstellung kann der eingeschlossene Schwenkwinkel größer ein als in der ersten Parkstellung, wobei dieser je nach Einsatzsituation bzw. je nach Größe der einblickenden Position variabel sein kann.

Erfindungsgemäß ist die Abstrebung als Teleskop-Element ausgebildet. Die Ausgestaltung als Teleskop-Element ermöglicht es, dass die Länge der Abstrebung auf konstruktiv einfache Weise verändert werden kann, weshalb auch die Gefahr eines Verkantens gering ist.

In Bezug auf das Teleskop-Element hat es sich als vorteilhaft herausgestellt, wenn dieser einen Kolbenabschnitt und einen Zylinderabschnitt aufweist, wobei der Kolbenabschnitt im Zylinderabschnitt geführt ist und der Kolbenabschnitt zur Verkürzung des Teleskop-Elements zumindest teilweise in den Zylinderabschnitt eintauchen kann. Zur Verlängerung des Teleskop-Elements kann der Kolbenabschnitt zumindest teilweise aus dem Zylinderabschnitt herausgezogen werden. Durch diese Konstruktion ist es auf einfache Art und Weise möglich, die Länge des Teleskop-Elements durch den Eintauchweg des Kolbenabschnitts im Zylinderabschnitt festzulegen.

Weiterhin wird in Bezug auf die Abstrebung vorgeschlagen, dass die Länge der Abstrebung über eine Fixiervorrichtung festlegbar ist. Durch diese Fixiervorrichtung wird erreicht, dass der Einblickspiegel sowohl in den Parkpositionen als auch in der Einblickposition festgelegt werden kann. Ferner ist es vorteilhaft, wenn die Fixiervorrichtung derart ausgestaltet ist, dass die Länge beliebig und stufenlos verändert werden kann und die verschiedenen Positionen nicht vorab festgelegt sein müssen. Der Einblickspiegel kann daher in jeder Position festlegbar sein und die Fixiervorrichtung kann unabhängig davon, wie weit der Kolbenabschnitt in den Zylinderabschnitt eingetaucht ist, festlegbar sein.

In konstruktiver Hinsicht hat es sich als vorteilhaft herausgestellt, wenn die Fixiervorrichtung ein Drehelement und ein Druckelement aufweist, wobei das Druckelement eine veränderbare Reibkraft auf den Kolbenabschnitt ausüben kann und wobei zur Festlegung des Teleskop-Elements die Reibkraft über das Drehelement einstellbar ist. Durch Drehung des Drehelements kann die Größe der auf den Kolbenabschnitt wirkenden Reibkraft variiert werden. Durch das Druckelement kann eine Druckkraft erzeugt werden, die seitlich auf den Kolbenabschnitt wirkt, so dass die sich ergebende Reibkraft eine Relativbewegung zwischen Kolbenabschnitt und Zylinderabschnitt verhindert. Die Fixiervorrichtung bzw. das Dreh- und das Druckelement können beide am Zylinderabschnitt angeordnet und mit diesen verbunden sein.

Im Hinblick auf die Längenänderung der Abstrebung wird alternativ oder zusätzlich vorgeschlagen, dass die Abstrebung einen Hydraulikzylinder aufweist. Dieser Hydraulikzylinder kann ebenfalls zwei verschieblich ineinander gelagerte Elemente aufweisen, wobei durch das Eintauchen des einen Elements die Länge der Abstrebung verringert und durch das Hinausziehen die Länge der Abstrebung vergrößert werden kann.

In Bezug auf den Hydraulikzylinder hat es sich ferner als vorteilhaft herausgestellt, wenn die Dämpfung des Hydraulikzylinders zur Verringerung unbeabsichtigter Einblickspiegelbewegungen einstellbar ist. Es kann beispielsweise nötig sein, bei einer schnellen Geländefahrt eine hohe Dämpfung einzustellen, so dass eine große Kraft benötigt wird, um den Einblickspiegel zu verschwenken. Bei einer wenig holprigen Straßenfahrt kann die Dämpfung hingegen deutlich geringer sein, so dass dann der Einblickspiegel auch nur durch eine sehr geringe Kraft eingeklappt bzw. verstellt werden kann.

Eine weitere bevorzugte Ausgestaltung sieht vor, dass an mindestens einer Abstrebung ein Klemmelement, insbesondere ein Exzenterspanner, zur Fixierung des Einblickspiegels in der Einblickstellung vorgesehen ist. Durch das Vorsehen eines solchen Klemmelements kann der Einblickspiegel, insbesondere über den gesamten Schwenkbereich, mechanisch arretiert werden. Dabei hat es sich als vorteilhaft erwiesen, wenn das Klemmelement als Schnellspanner, insbesondere als Exzenterspanner, ausgebildet ist. Alternative Ausgestaltungen des Klemmelements sind jedoch auch denkbar. Mit Hilfe eines derartigen Schnellspannsystems kann die Abstrebung schnell und ohne zusätzliche Werkzeuge von Hand gelöst und/oder in einer gewünschten Position festgelegt werden.

In diesem Zusammenhang ist es weiter vorteilhaft, wenn das Klemmelement in der Parkstellung an dem Einblickspiegel und in der Einblickstellung an einer fahrzeugfesten Halterung befestigbar ist. In der Parkstellung kann die Abstrebung mittels des Klemmelements an den Einblickspiegel geklemmt werden. Durch das Befestigen des Klemmelements an dem Einblickspiegel kann auf einfache Art und Weise ein Mitschwenken der Abstrebung mit dem Einblickspiegel erreicht werden, ohne dass die Abstrebung den Einblickbereich und/oder den Raum unterhalb des Einblickspiegels versperrt. Aufgrund dessen kann beispielsweise ein Nachtsichtgerät oder dergleichen unterhalb der Luke eingebaut werden, ohne dass es erforderlich ist, den Einblickspiegel und/oder die Abstrebungen zu demontieren. Dabei hat es sich als besonders vorteilhaft erwiesen, wenn der zwischen dem Einblickspiegel und der Abstrebung eingeschlossene Schwenkwinkel in der Parkstellung kleiner als 45°, bevorzugt kleiner als 20°, und besonders bevorzugt kleiner als 10° ist. Aufgrund dieses kleinen Schwenkwinkels liegen die Abstrebung und der Einblickspiegel nahe beieinander, so dass der im Fahrzeuginnenraum benötigte Platz gering ist. Besonders bevorzugt ist es jedoch, wenn der Schwenkwinkel in der Parkstellung beispielsweise 0° beträgt, so dass dann die Abstrebung und der Einblickspiegel miteinander fluchten.

In der Einblickstellung kann die Abstrebung über das Klemmelement mit einem fahrzeugfesten Fixpunkt, beispielsweise mit dem Fahrzeugdach, fest verbunden werden. Auf diese Weise kann auch bei einem fahrenden Fahrzeug eine stabile Arretierung des Einblickspiegels in einer gewünschten Einblickstellung erreicht werden, weshalb der Einblickspiegel in der eingestellten Position verbleibt und nicht etwa durch Rüttelbewegungen oder dergleichen verstellt wird. Hierzu kann an dem Fahrzeug eine fahrzeugfesten Halterung vorgesehen sein, an welcher die Abstrebung montiert und/oder von dieser demontiert werden kann, ohne die fahrzeugfeste Halterung selbst montieren und/oder demontieren zu müssen. Hierdurch kann der Aufwand bei der Befestigung des Einblickspiegels deutlich verringert werden. Die fahrzeugfeste Halterung kann bevorzugt an die Geometrie des Klemmelements und/oder der Abstrebung angepasst sein, derart dass die Abstrebung und/oder das Klemmelement mit der fahrzeugfesten Halterung in Eingriff gelangen können. Bevorzugt kann die fahrzeugfeste Halterung mindestens eine Aufnahme zur Aufnahme der Abstrebung aufweisen, welche besonders bevorzugt U-förmig ausgestaltet sein kann. Die fahrzeugfeste Halterung kann dabei beispielsweise im Bereich einer Luke angeordnet sein. Als besonders bevorzugt hat es sich gezeigt, wenn die fahrzeugfeste Halterung auf einer dem Einblickspiegel gegenüberliegenden Seite einer Fahrzeugluke angeordnet ist. In diesem Zusammenhang es sich ferner als vorteilhaft erwiesen, wenn der zwischen dem Einblickspiegel und der Abstrebung eingeschlossene Schwenkwinkel in der Einblickstellung zwischen 45° und 120°, bevorzugt zwischen 60° und 100° und besonders bevorzugt im Wesentlichen 90°beträgt. Aufgrund dieses Schwenkwinkels können die Abstrebung und der Einblickspiegel in einer stabilen Lage zueinander arretiert werden.

Ferner bevorzugt ist, wenn an dem Einblickspiegel eine spiegelfeste Halterung zur Fixierung des Klemmelements in der Parkstellung vorgesehen ist. Auf diese Weise kann die Abstrebung in einer festgelegten Position mit dem Einblickspiegel mitschwenken, ohne eine Relativbewegung zu dem Einblickspiegel zu erzeugen. Die spiegelfeste Halterung kann mit dem Einblickspiegel und insbesondere dem oberen Teil des Einblickspiegels beispielsweise über Schrauben, Kleben oder dergleichen verbunden sein, so dass sich eine feste Verbindung mit dem Einblickspiegel ergeben kann. Die spiegelfeste Halterung kann bevorzugt an die Geometrie des Klemmelements und/oder der Abstrebung angepasst sein, derart dass die Abstrebung und/oder das Klemmelement mit der Halterung in Eingriff gelangen können. Bevorzugt kann die spiegelfeste Halterung mindestens eine Aufnahme zur Aufnahme der Abstrebung aufweisen, welche besonders bevorzugt U-förmig ausgestaltet sein kann. Dabei kann es ferner von Vorteil sein, wenn die fahrzeugfeste Halterung und die spiegelfeste Halterung insbesondere in Bezug auf die Aufnahmen gleich ausgebildet sind. Im angeklemmten Zustand des Klemmelements an der spiegelfesten Halterung kann eine Verstellung des Klemmelements und insbesondere eine Änderung der Klemmkraft verhindert werden. Darüber hinaus kann das Klemmelement gegen Abscheren gesichert werden.

Gemäß einer vorteilhaften Ausgestaltung sind zwei Abstrebungen vorgesehen, welche über ein Distanzelement miteinander verbunden sind. Der Einblickspiegel kann mit zwei Abstrebungen verbunden sein, von denen eine an der einen Seite und die andere an der gegenüberliegenden anderen Seite des Einblickspiegels angeordnet sein kann. Durch die Verbindung der beiden Abstrebungen über ein Distanzelement kann erreicht werden, dass die Abstrebungen gemeinsam und in einer definierten Position zueinander verschwenkt werden. Besonders bevorzugt können die Abstrebungen zueinander parallel verlaufen und parallel verschwenkt werden. Das Distanzelement kann bevorzugt als Querstrebe, beispielsweise in Form eines Stabs, ausgebildet und durch Augen der Abstrebungen geführt sein. Das Distanzelement kann die Abstrebungen ferner seitlich überragen, so dass sich eine Art seitlicher Pin ergibt. Dieser seitliche Versatz kann bevorzugt dazu ausgelegt sein, mit der spiegelfesten Halterung und/oder der fahrzeugfesten Halterung in Eingriff zu gelangen und die Abstrebungen an diesen zu befestigen.

Darüber hinaus wird zur **Lösung** der eingangs genannten Aufgabe ein Verfahren vorgeschlagen, bei welchem ein an der Abstrebung angeordnetes Klemmelement in der Parkstellung an dem Einblickspiegel und in der Einblickstellung an einer fahrzeugfesten Halterung befestigt wird. In der Parkstellung kann die Abstrebung über das Klemmelement an den Einblickspiegel geklemmt werden und so die Abstrebung und der Einblickspiegel gemeinsam miteinander verschwenkt werden. Dabei ist ein Verschwenken über den gesamten Bereich möglich. Um den Einblickspiegel aus der Parkstellung in die Einblickstellung zu bewegen und dort zu arretieren, hat sich folgende Vorgehensweise als vorteilhaft erwiesen: Zunächst können die zur Befestigung der Abstrebung an dem Einblickspiegel vorgesehenen und durch die Gelenkaugen geführten Muttern und/oder die Fixiervorrichtung an dem Teleskop-Element gelöst werden. In einem nächsten Schritt kann das Klemmelement geöffnet, das Distanzelement in die an der fahrzeugfesten Halterung angeordneten Aufnahmen geführt und mit dem Klemmelement wieder fest geklemmt werden. Alternativ oder zusätzlich kann der Einblickspiegel dann mit Hilfe des Teleskop-Elements in der vom Bediener gewünschten Stellung justiert werden. Zum Fixieren des Einblickspiegels können die unteren Muttern am Einblickspiegel und die Fixiervorrichtungen wieder befestigt werden, beispielsweise durch eine Rechtsdrehung. Zur Bewegung des Einblickspiegels aus der Einblickstellung in die Parkstellung können die einzelnen Schritte erneut durchgeführt werden, lediglich mit dem Unterschied, dass die Abstrebung von der fahrzeugfesten Halterung gelöst und in die spiegelfeste Halterung geführt und dort verklemmt werden kann.

Zur **Lösung** der eingangs genannten Aufgabe wird ferner eine Ausblickvorrichtung zum Ausblick aus einem militärischen Fahrzeug mit einem Ausblickspiegel und einem Klappwinkelspiegel vorgeschlagen, wobei es sich als vorteilhaft herausgestellt, wenn der Klappwinkelspiegel zumindest eines der zuvor beschriebenen Merkmale aufweist.

Eine bevorzugte Ausgestaltung der Ausblickvorrichtung sieht eine fahrzeugfeste Halterung zur Befestigung einer Abstrebung eines Klappwinkelspiegels vor. Die fahrzeugfeste Halterung kann bevorzugt im Bereich einer Luke des Fahrzeugs angeordnet sein. Als besonders vorteilhaft hat es sich dabei erwiesen, wenn die fahrzeugfeste Halterung an der einen Seite der Luke und der Einblickspiegel an der der fahrzeugfesten Halterung gegenüberliegenden Seite der Luke angelenkt ist. Auf diese Weise kann der Einblickspiegel in der Einblickstellung unterhalb der Luke verspannt werden, wodurch sich eine stabile Lagerung des Einblickspiegels ergeben kann. In der Parkstellung ist die Abstrebung nicht mit der fahrzeugfesten Halterung in Eingriff, so dass dann der Bereich unterhalb der Luke frei liegt.

Die eingangs genannte Aufgabe wird ferner durch ein Fahrzeug, insbesondere ein militärisches Fahrzeug, mit einer Ausblickvorrichtung **gelöst**. Es ergeben sich die gleichen Vorteile, welche bereits im Zusammenhang mit dem Klappwinkelspiegel und/oder der Ausblickvorrichtung und/oder dem Verfahren beschrieben wurden, wobei einzelne Merkmale allein oder in Kombination Verwendung finden können.

Weitere Einzelheiten und Vorteile der Erfindung sollen nachfolgend anhand eines in den Figuren dargestellten Ausführungsbeispiels erläutert werden. Darin zeigt:
- Fig. 1: ein erstes Ausführungsbeispiel der erfindungsgemäßen Ausblickvorrichtung mit einem erfindungsgemäßen Klappwinkelspiegel in einer Seitenansicht,
- Fig. 2: ein erstes Ausführungsbeispiel des Klappwinkelspiegels in einer Einblickstellung aus Sicht einer im Fahrzeug sitzenden Person,
- Fig. 3: eine Detailansicht der eines ersten Ausführungsbeispiels Abstrebung,
- Fig. 4: eine Schnittdarstellung der Abstrebung gem. Fig. 3,
- Fig. 5: ein zweites Ausführungsbeispiel der erfindungsgemäßen Ausblickvorrichtung mit einem erfindungsgemäßen Klappwinkelspiegel in einer Seitenansicht in der Parkstellung,
- Fig. 6: ein zweites Ausführungsbeispiel der erfindungsgemäßen Ausblickvorrichtung mit einem erfindungsgemäßen Klappwinkelspiegel in einer Seitenansicht in der Einblickstellung, und
ein zweites Ausführungsbeispiel des Klappwinkelspiegels in
- Fig. 7: einer Einblickstellung aus Sicht einer im Fahrzeug sitzenden Person.

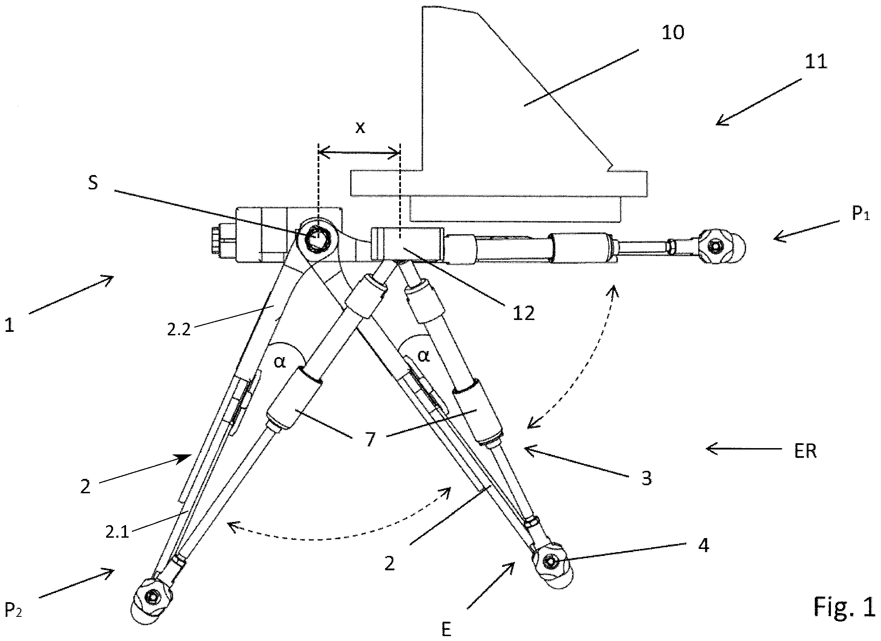

In Fig. 1 ist ein erstes Ausführungsbeispiel der erfindungsgemäßen Ausblickvorrichtung 11 in einer Seitenansicht gezeigt. Diese ist in einem nicht darstellten Fahrzeug angeordnet und ermöglicht eine Beobachtung der Umgebung, ohne dass eine Person ihren Kopf aus dem Fahrzeug strecken und sich damit einer Gefahr aussetzten muss. Innerhalb des Fahrzeugs ist dafür ein Klappwinkelspiegel 1 mit einem Einblickspiegel 2 vorgesehen, der in der Darstellung in Fig. 1 in verschiedenen Positionen, nämlich einer ersten Parkposition P₁, einer zweiten Parkposition P₂ und einer Einblickstellung E, dargestellt ist. Der Einblickspiegel 2 ist zweiteilig ausgeführt, wobei der untere Teil 2.1 des Einblickspiegels 2 den eigentlichen Spiegel aufweist und der obere Teil 2.2 zur Befestigung des Einblickspiegels 2 an dem Fahrzeug dienen kann. Der untere Teil 2.1 des Einblickspiegels 2 kann insbesondere austauschbar ausgestaltet sein. Hierzu können beispielsweise flache Schrauben an dem unteren Teil 2.1 vorgesehen sein, welche handfest mit dem oberen Teil 2.2 des Einblickspiegels 2 verschraubt werden können.

Außen am Fahrzeug ist ein Ausblickspiegel 10 angeordnet, der Lichtstrahlen der Umgebung durch eine Öffnung in der Dachpanzerung des Fahrzeugs ins Inne des Fahrzeugs leiten kann. Im Fahrzeuginneren fallen diese Lichtstrahlen dann auf den sich in der Einblickposition E befindlichen Einblickspiegel 2, so dass eine Person im Fahrzeug die Umgebung beobachten kann, ohne dass eine direkte Sichtverbindung bestehen muss.

Damit der Einblickspiegel 2 in die verschiedenen Positionen bewegt werden kann, ist dieser gemäß der in der Fig. 1 gestrichelt dargestellten Linien um eine Schwenkachse S drehbar gelagert. Im Folgenden werden nun zuerst die verschiedenen Positionen des Einblickspiegels 2 näher erläutert, bevor dann auf die konstruktive Ausgestaltung des Klappwinkelspiegels 1 weiter eingegangen wird.

In der ersten Parkposition P₁ liegt der Einblickspiegel 2 nahe am Fahrzeugdach und ist möglichst parallel zu diesem angeordnet, so dass der Klappwinkelspiegel 1 im Inneren des Fahrzeugs nur wenig Platz benötigt und die Bewegungsfreiheit der im Fahrzeug befindlichen Personen möglichst wenig verringert ist.

Durch Verschwenken des Einblickspiegels 2 um die Schwenkachse S ist dieser in die Einblickstellung E bewegbar, in der die vom Ausblickspiegel 10 reflektierten Lichtstrahlen zum Einblickspiegel 2 und dann zum Beobachter geleitet werden. Die Einblickposition E ist dabei nicht von vornherein festgelegt, sondern der Einblickspiegel 2 ist stufenlos verstellbar. Denn beispielsweise kann der Einblickspiegel 2 für verschieden große Beobachter auch in verschiedene Einblickpositionen E verstellt werden.

In der zweiten Parkstellung P₂ ist der Einblickspiegel 2 derart verschwenkt, dass er aus dem Bereich unterhalb des Ausblickspiegels 10 ausgeschwenkt ist, so wie dies auch in der Darstellung der Fig. 1 zu erkennen ist. In dieser Position ist der Einblickspiegel 2 selbst nicht in Gebrauch, jedoch können im Bereich unter dem Ausblickspiegel 10 in den Darstellungen nicht dargestellte Zusatzmodule wie beispielsweise ein Nachtsichtgerät installiert werden.

Um den Einblickspiegel 2 in den verschiedenen Positionen P₁, P₂, E zu fixieren, ist dieser mit zwei längenveränderbaren Abstrebungen 3 verbunden, die nach Art eines Teleskop-Elements ausgebildet sind. Diese Abstrebungen 3 sind jeweils in Einblickrichtung ER an einer Seite des Einblickspiegels 2 angeordnet und über ein Gelenk in Form eines Gelenkauges 4 gelenkig mit einem unteren Bereich des Einblickspiegels 2 verbunden. Dafür ist durch den Einblickspiegel 2 und durch das Gelenkauge 4 der Abstrebung 3 ein Stift geführt, so dass die beiden Elemente schwenkbeweglich miteinander gekoppelt sind.

Am gegenüberliegenden Ende sind die Abstrebungen 3 über einen Kugelkopf 13 in einem im Dachbereich des Fahrzeugs und unbeweglich mit diesem verbundenen Lagerblock 12 angeordnet, so dass die Abstrebungen 3 jeweils um einen Schwenkpunkt SP schwenkbeweglich gegenüber dem Lagerblock 12 angeordnet sind.

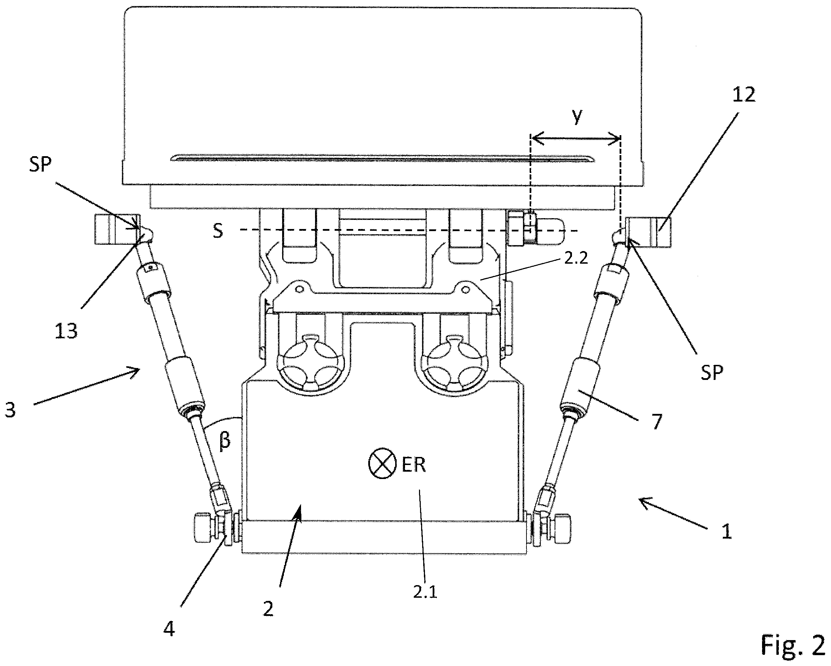

Gemäß der Darstellung in Fig. 2 sind die die Lagerblöcke 12 jeweils senkrecht zur Einblickrichtung ER beabstandet zum Einblickspiegel 2 angeordnet. Durch diesen Abstand y ergibt sich zwischen den Abstrebungen 3 und dem Einblickspiegel 2 jeweils ein Ausrückwinkel β, so dass die Sicht auf den Einblickspiegel 2 nicht durch die Abstrebung 3 beeinträchtigt wird.

Gemäß der Darstellung in Fig. 1 weisen auch die Schwenkachse S des Einblickspiegels 2 und der Schwenkpunkt SP der Abstrebung 3 in Einblickrichtung ER einen Abstand x zueinander auf. Dieser Abstand x ermöglichst, dass die Abstrebung 3 den Einblickspiegel 2 in verschiedenen Positionen abstützen kann, so wie dies nachfolgend noch näher erläutert wird.

Um den Einblickspiegel 2 zu verschwenken, muss aufgrund des Abstandes x die Abstrebung 3 längenveränderbar sein. Wie dies in der Fig. 1 zu erkennen ist, ist die Abstrebung 3 am kürzesten, wenn diese mit dem Einblickspiegel 2 fluchtet und sich der Einblickspiegel 2 in der ersten Parkposition P₁ befindet. In dieser Stellung beträgt der von der Abstrebung 3 und dem Einblickspiegel 2 gebildete Schwenkwinkel α null Grad, so dass auch das in der Fig. 1 zu erkennende und von der Abstrebung 3, dem Einblickspiegel 2 und dem Abstand x gebildete Dreieck zu einer geraden Linie entartet.

Wenn der Einblickspiegel 2 aus der ersten Parkposition P₁ um die Schwenkachse S in eine Einblickstellung E verschwenkt wird, wird der Schwenkwinkel α zwischen der Abstrebung 3 und dem Einblickspiegel 2 entsprechend größer, so dass auch die Abstrebung 3 verlängert werden muss. Je weiter der Einblickspiegel 2 um die Schwenkachse S verschwenkt wird, desto länger muss auch die Abstrebung 3 werden, so dass zwischen der Länge der Abstrebung 3 und der Position des Einblickspiegels 2 ein fester Zusammenhang besteht. Der Schwenkwinkel α ändert entsprechend beim Verschwenken des Einblickspiegels 2 seine Größe, so dass auch dieser von der Position des Einblickspiegels 2 abhängig ist.

Um den Einblickspiegel 2 in den verschiedenen Positionen festzulegen, so dass sich dieser nicht mehr bewegen lässt und es auch bei holprigen Geländefahrten nicht zu unbeabsichtigten Bewegungen kommt, weist die Abstrebung 3 eine Fixiervorrichtung 7 auf, mit welcher die Länge der Abstrebung 3 fixiert werden kann. Aufgrund der Abhängigkeit der Länge der Abstrebung 3 und der Position des Einblickspiegels 2 kann über die Einstellung der Länge entsprechend auch die Position des Einblickspiegels 2 festgelegt werden.

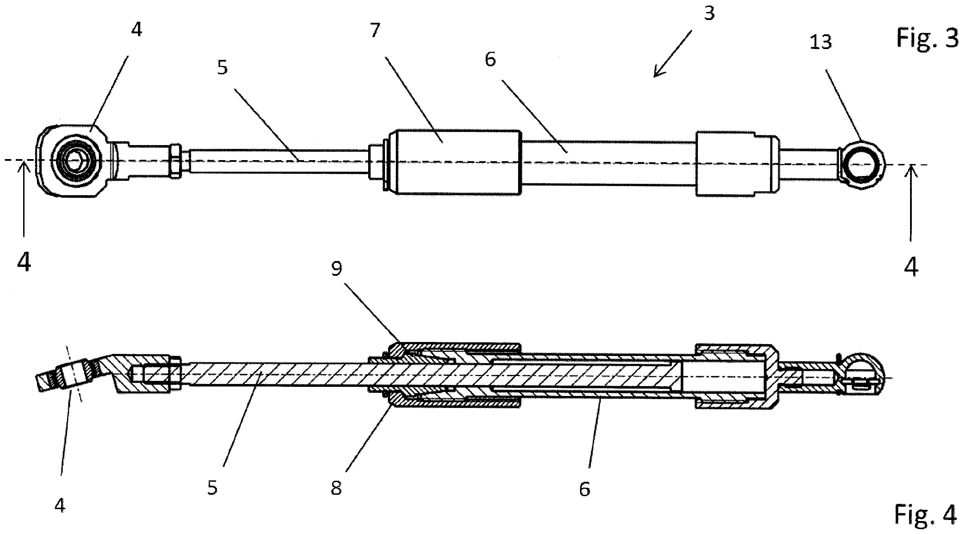

Eine detaillierte Darstellung der Abstrebung 3 ist in den Darstellungen der Fig. 3 und 4 dargestellt. Die Abstrebung 3 besteht im Wesentlichen aus einem über den Gelenkkopf 13 mit dem Lagerblock 12 verbundenen Zylinderabschnitt 6, in welchem ein mit dem Einblickspiegel 2 verbundener Kolbenabschnitt 5 verschieblich gelagert ist. Indem der Kolbenabschnitt 5 weiter oder weniger weit in den Zylinderabschnitt 6 eintaucht, kann die Länge der Abstrebung 3 variiert und damit die Position des Einblickspiegels 2 festgelegt werden.

Um die Länge der Abstrebung 3 zu fixieren, weist diese eine an einem Ende des Zylinderabschnitts 6 angeordnete Fixiervorrichtung 7 auf, mittels welcher der Kolbenabschnitt 5 gegenüber dem Zylinderabschnitt 6 festgelegt werden kann. Die Fixiervorrichtung 7 weist dafür ein zylinderförmiges Drehelement 8 und ein sich im Drehelement 8 befindliches Druckelement 9 auf, durch welches der Kolbenabschnitt 5 hindurchgeführt ist. Das Druckelement 9 liegt direkt am Kolbenabschnitt 5 an und kann auf dieses eine seitliche Kraft ausüben, so dass sich der Kolbenabschnitt 5 aufgrund der Reibung nicht mehr im Zylinderabschnitt 6 bewegen kann. Die auf den Kolbenabschnitt 6 wirkende Kraft ist dabei abhängig von der Stellung des Drehelements 8, denn dieses wirkt mit dem Druckelement 9 in der Art zusammen, dass die vom Druckelement 9 auf den Kolbenabschnitt 5 gewirkte Kraft abhängig von der Stellung des Drehelements 8 ist.

Durch die Koppelung von Drehelement 8 und Druckelement 9 kann das Drehelement 8 beispielweise so weit gelöst werden, dass die vom Druckelement 9 ausgeübte Druckkraft so gering ist, dass sich der Kolbenabschnitt 5 im Zylinderabschnitt 6 bewegen kann und demnach die Länge der Abstrebung 7 einstellbar ist. In dieser Stellung des Drehelements 8 ist der Einblickspiegel 2 dann um die Schwenkachse S schwenkbar, so dass dieser in seine gewünschte Position verschwenkt werden kann. Durch Drehen des Drehelements 8 in die entgegengesetzte Richtung kann der Druck auf den Kolbenabschnitt 5 wieder erhöht werden, so dass sich dieser nicht mehr relativ zum Zylinderabschnitt 6 bewegen kann und die Länge der Abstrebung 3 und die Position des Einblickspiegels 2 damit festgelegt ist.

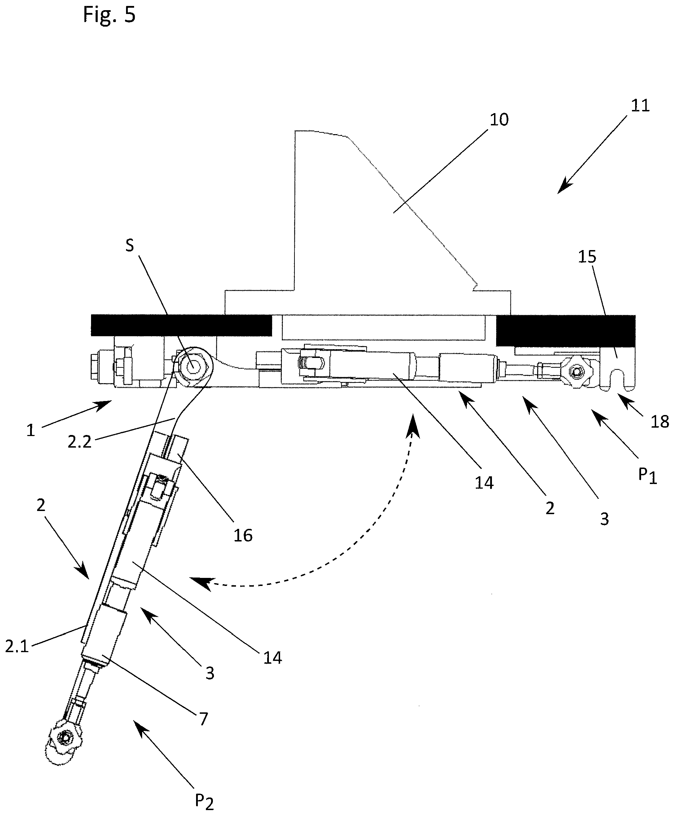

In den Fig. 5 bis 7 ist ein zweites Ausführungsbeispiel der erfindungsgemäßen Ausblickvorrichtung 11 dargestellt. Die Grundfunktionalität und insbesondere der Schwenkmechanismus sind dabei identisch wie bei dem ersten Ausführungsbeispiel. Im Gegensatz zu dem ersten Ausführungsbeispiel ist hier jedoch das Gelenkauge 4 geschlitzt ausgeführt sein, wodurch bei einem Defekt des Einblickspiegels 2 insbesondere der untere Teil 2.1 zügig ausgetauscht werden kann.

Darüber hinaus ist, wie dies beispielsweise die Fig. 5 zeigt, an der Abstrebung 3 alternativ oder zusätzlich ein Klemmelement 14 vorgesehen, welches als Schnellspanner und insbesondere als Exzenterspanner ausgebildet ist. Mit Hilfe dieses Klemmelements 14 kann der Einblickspiegel 2 in der Einblickstellung E an einem fahrzeugfesten Fixpunkt etwa an dem Fahrzeugdach eines Fahrzeugs und/oder in der Parkstellung P₁, P₂ an dem Einblickspiegel 2 fixiert werden.

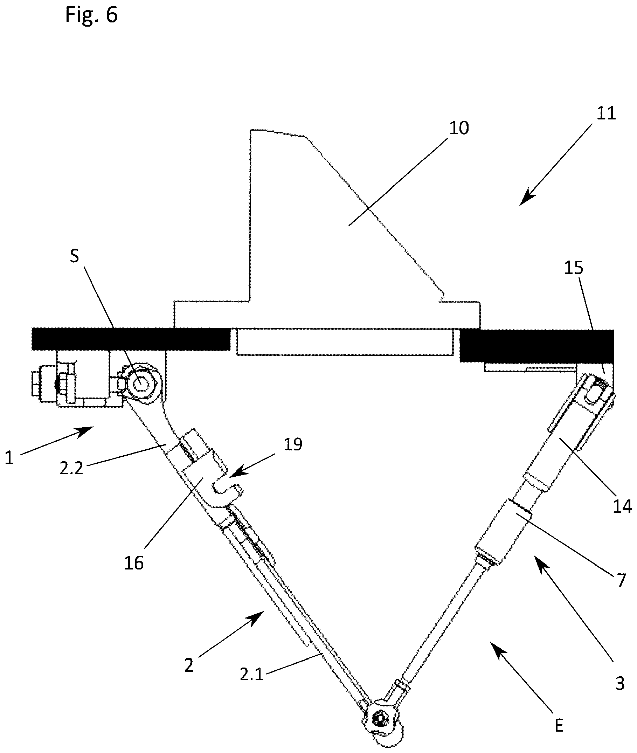

Wie dies beispielsweise die Fig. 6 zeigt, kann zur Befestigung der Abstrebung 3 eine fahrzeugfeste Halterung 15 an dem Fahrzeugdach vorgesehen sein. Die fahrzeugfeste Halterung 15 kann dabei beispielsweise als Blechhalterung oder dergleichen ausgebildet sein, welche mit dem Fahrzeugdach verschraubt werden kann. Die Halterung 15 kann dabei im Bereich einer Luke des Fahrzeugs angeordnet sein. Als besonders vorteilhaft hat es sich dabei erwiesen, wenn die fahrzeugfeste Halterung 15 an der einen Seite der Luke und der Einblickspiegel 2 an der der fahrzeugfesten Halterung 15 gegenüberliegenden Seite der Luke angeordnet ist. Auf diese Weise kann der Einblickspiegel 2 in der Einblickstellung E unterhalb der Luke verspannt werden, wodurch sich eine stabile Lagerung des Einblickspiegels 2 ergeben kann. In der Parkstellung P₁, P₂ ist die Abstrebung 3 nicht mit der fahrzeugfesten Halterung 15 in Eingriff, so dass dann der Bereich unterhalb der Luke frei liegt.

Die fahrzeugfeste Halterung 15 kann Aufnahmen 18 aufweisen, in welche die Abstrebung 3 eingreifen kann und gegen welche das Klemmelement 14 verspannt werden kann. Die Aufnahmen 18 können bevorzugt U-förmig ausgebildet sein, so dass die Abstrebung 3 auf einfache Art und Weise in diese Eingreifen kann. Die Abstrebung 3 kann so mit der Halterung 15 in Eingriff gelangen und dann mittels des Klemmelements 14 arretiert werden. So kann auch bei einem fahrenden Fahrzeug eine stabile Befestigung des Einblickspiegels 2 in einer gewünschten Einblickstellung E erreicht werden. Der Einblickspiegel 2 verbleibt auf diese Weise auch bei einem sich bewegenden Fahrzeug in der eingestellten Position und es kommt nicht beispielsweise aufgrund von Rüttelbewegungen oder dergleichen zu einer Verstellung des Einblickspiegels 2. Mit Hilfe der fahrzeugfesten Halterung 15 kann die Abstrebung 3 montiert und/oder demontiert werden, ohne die Halterung 15 selbst montieren und/oder demontieren zu müssen. Hierdurch kann der Aufwand bei der Befestigung des Einblickspiegels 2 deutlich verringert werden.

Zur Fixierung des Klemmelements 14 in der Parkstellung P₁, P₂ ist hingegen an dem Einblickspiegel 2 eine spiegelfeste Halterung 16 vorgesehen, welche besonders bevorzugt mit dem oberen Teil 2.2 des Einblickspiegels 2 verbunden sein kann. In der Parkstellung P₁, P₂ ist es nicht erforderlich, dass der Einblickspiegel 2 zusätzlich an einer fahrzeugfesten Position abgestützt wird. Vielmehr hat es sich als vorteilhaft erwiesen, wenn die Abstrebungen 3 aus dem Sichtfeld des Benutzers herausgeschwenkt werden können, um so beispielsweise Platz zur Montage eines nicht näher dargestellten Nachsichtgeräts oder dergleichen zu schaffen. Die spiegelfeste Halterung 16 kann an dem Einblickspiegel 2 befestigt sein, beispielsweise über Schrauben, Verriegelungselemente, Kleben oder dergleichen. Auch die Halterung 16 kann Aufnahmen 19 aufweisen, in welche die Abstrebung 3 eingreifen kann und gegen welche das Klemmelement 14 verspannt werden kann. Im angeklemmten Zustand des Klemmelements 14 an der spiegelfesten Halterung 16 kann eine Verstellung des Klemmelements 14 und insbesondere eine Änderung der Klemmkraft verhindert werden. Darüber hinaus kann das Klemmelement 14 gegen Abscheren gesichert werden. Auf diese Weise kann die Abstrebung 3 in einer festgelegten Position mit dem Einblickspiegel 2 mitschwenken, ohne dass eine Relativbewegung zu dem Einblickspiegel 2 entsteht.

In diesem Zusammenhang es sich dabei als vorteilhaft erwiesen, wenn der zwischen dem Einblickspiegel 2 und der Abstrebung 3 eingeschlossene Schwenkwinkel α in der Einblickstellung E zwischen 45° und 120°, bevorzugt zwischen 60° und 100° und besonders bevorzugt im Wesentlichen 90°beträgt. Aufgrund dieses Schwenkwinkels α können die Abstrebung 3 und der Einblickspiegel 2 in einer stabilen Lage zueinander arretiert werden. Darüber hinaus hat es sich als vorteilhaft erwiesen, wenn der Schwenkwinkel α in der Parkstellung P₁, P₂ kleiner als 45°, bevorzugt kleiner als 20°, und besonders bevorzugt kleiner als 5° ist. Aufgrund dieses kleinen Schwenkwinkels α liegen die Abstrebung 3 und der Einblickspiegel 2 nahe beieinander, so dass der im Fahrzeuginnenraum benötigte Platz gering ist. Besonders bevorzugt ist es jedoch, wenn der Schwenkwinkel α in der Parkstellung P₁, P₂ beispielsweise 0° beträgt, so dass dann die Abstrebung 3 und der Einblickspiegel 2 miteinander fluchten.

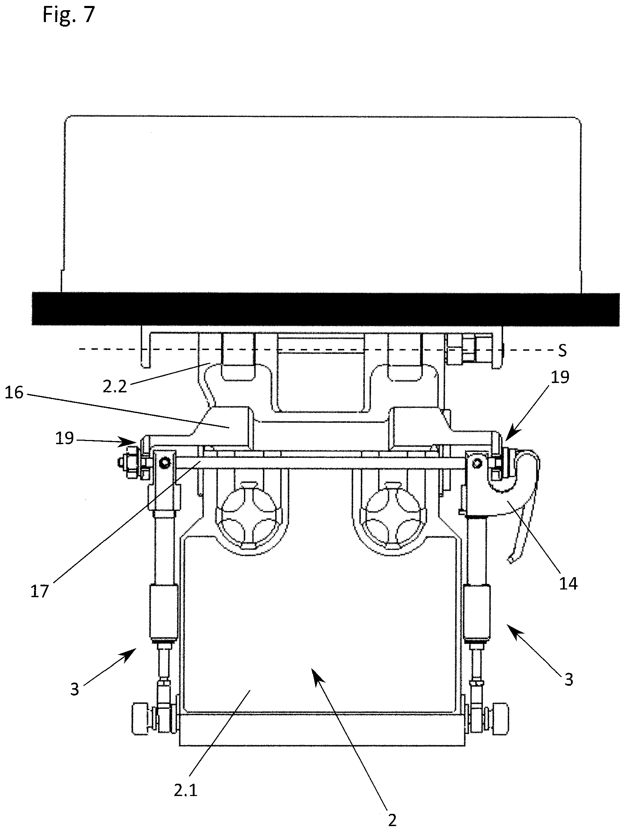

Wie dies der Fig. 7 zu entnehmen ist, sind bei dem zweiten Ausführungsbeispiels zwei Abstrebungen 3 vorgesehen, welche über ein Distanzelement 17 miteinander verbunden sind. Das Distanzelement 17 ist als Querstrebe ausgebildet, beispielsweise in Form eines Stabs, welcher sich zwischen zwei Enden der Abstrebungen 3 erstreckt und so die Bewegungen der beiden Abstrebungen 3 miteinander koppelt. Das Distanzelement 17 kann beispielsweise durch die Augen der Abstrebungen 3 geführt sein, welche nicht am Einblickspiegel 2 montiert sind und alternativ oder zusätzlich seitlich über die Abstrebungen 3 hinausragen. Auf diese Weise ergeben sich an der rechten und an der linken Seite des Einblickspiegels 2 seitliche Pins, welche sowohl in die fahrzeugfeste Halterung 15 als auch die spiegelfeste Halterung 16 eingreifen können.

In der Parkstellung P₁, P₂ ist die Abstrebung 3 zunächst über das Klemmelement 14 an den Einblickspiegel 2 und insbesondere an die spiegelfeste Halterung 16 geklemmt. Um den Einblickspiegel 2 nun in die Einblickstellung E zu bewegen und dort zu arretieren, können zunächst die unteren zwei Muttern, welche durch die Gelenkaugen 4 zur Verbindung der Abstrebung 3 und des Einblickspiegels 2 geführt sind, sowie die Fixiervorrichtung 7 gelöst werden. Danach kann dann das Klemmelement 14 geöffnet, das Distanzelement 17 in die fahrzeugfeste Halterung 15 geführt und die Abstrebung 3 dann mit dem Klemmelement 14 wieder befestigt werden. Der Einblickspiegel 2 kann dann mit Hilfe des Teleskop-Elements in die vom Bediener gewünschte Stellung justiert werden. Zum Fixieren des Einblickspiegels 2 können dann die unteren Muttern und die Fixiervorrichtung 7 wieder in eine angezogene Position verbracht werden. Zur Rückbewegung des Einblickspiegels 2 aus der Einblickstellung E in ein Parkstellung P₁, P₂ kann das Klemmelement 14 erneut gelöst, aus der fahrzeugfesten Halterung 15 herausgeführt, in die spiegelfeste Halterung 16 geführt und dort wieder verklemmt werden. Insoweit kann ein Ummontieren und insbesondere ein Umhängen der Abstrebung 3 aus der spiegelfesten Halterung 16 in die fahrzeugfeste Halterung 15 und umgekehrt stattfinden.

Durch die erfindungsgemäße Vorrichtung wird erreicht, dass der Einblickspiegel 2 auf zuverlässige Weise hinsichtlich seiner Position im Fahrzeug festgelegt werden kann und die dafür vorgesehene Abstrebung 3 nur einen sehr geringen Platzbedarf hat.

### Bezugszeichen:

- 1: Klappwinkelspiegel
- 2: Einblickspiegel
- 2.1: unterer Teil des Einblickspiegels
- 2.2: oberer Teil des Einblickspiegels
- 3: Abstrebung
- 4: Gelenkauge
- 5: Kolbenabschnitt
- 6: Zylinderabschnitt
- 7: Fixiervorrichtung
- 8: Drehelement
- 9: Druckelement
- 10: Ausblickspiegel
- 11: Ausblickvorrichtung
- 12: Lagerblock
- 13: Kugelkopf
- 14: Klemmelement
- 15: fahrzeugfeste Halterung
- 16: spiegelfeste Halterung
- 17: Distanzelement
- 18: Aufnahme
- 19: Aufnahme

- S: Schwenkachse
- SP: Schwenkpunkt
- E: Einblickposition
- ER: Einblickrichtung
- P₁: erste Parkposition
- P₂: zweite Parkposition
- α: Schwenkwinkel
- ß: Ausrückwinkel

## Patentansprüche

1. Klappwinkelspiegel für ein militärisches Fahrzeug mit einem um eine Schwenkachse (S) schwenkbaren Einblickspiegel (2), der insbesondere zwischen einer Einblickstellung (E) und einer Parkstellung (P₁, P₂) hin und her schwenkbar ist, und einer Abstrebung (3) zur Festlegung der Stellung des Einblickspiegels (2), wobei die Abstrebung (3) längenveränderbar ist,
**dadurch gekennzeichnet,**
**dass** die Abstrebung (3) als Teleskop-Element ausgebildet ist.

2. Klappwinkelspiegel nach Anspruch 1, **dadurch gekennzeichnet, dass** die Abstrebung (3) über einen Schwenkpunkt (SP) mit einem fahrzeugfesten Fixpunkt (12) verbindbar ist.

3. Klappwinkelspiegel nach einem der vorhergehenden Ansprüche,
**dadurch gekennzeichnet, dass** der zwischen dem Einblickspiegel (2) und der Abstrebung (3) eingeschlossene Schwenkwinkel (α) kleiner als 90 Grad, insbesondere kleiner als 45 Grad, ist.

4. Klappwinkelspiegel nach einem der vorhergehenden Ansprüche,
**dadurch gekennzeichnet, dass** die Länge der Abstrebung (3) über eine Fixiervorrichtung (7) festlegbar ist.

5. Klappwinkelspiegel nach Anspruch 4, **dadurch gekennzeichnet, dass** die Position eines Kolbenabschnitts (5) in einem Zylinderabschnitt (6) durch die Fixiervorrichtung (7) festlegbar ist.

6. Klappwinkelspiegel nach Anspruch 5, **dadurch gekennzeichnet, dass** die Fixiervorrichtung (7) ein Drehelement (8) und ein Druckelement (9) aufweist, wobei das Druckelement (9) eine veränderbare Reibkraft auf den Kolbenabschnitt (5) ausüben kann und wobei zur Festlegung des Teleskop-Elements die Reibkraft über das Drehelement (8) einstellbar ist.

7. Klappwinkelspiegel nach einem der vorhergehenden Ansprüche,
**dadurch gekennzeichnet, dass** an mindestens einer Abstrebung (3) ein Klemmelement (14), insbesondere ein Exzenterspanner, zur Fixierung des Einblickspiegels (2) in der Einblickstellung (E) vorgesehen ist.

8. Klappwinkelspiegel nach Anspruch 7, **dadurch gekennzeichnet, dass** das Klemmelement (14) in der Parkstellung (P₁, P₂) an dem Einblickspiegel (2) und in der Einblickstellung (E) an einer fahrzeugfesten Halterung (15) befestigbar ist.

9. Klappwinkelspiegel nach einem der Ansprüche 7 oder 8, **dadurch gekennzeichnet, dass** an dem Einblickspiegel (2) eine spiegelfeste Halterung (16) zur Fixierung des Klemmelements (14) in der Parkstellung (P₁, P₂) vorgesehen ist.

10. Klappwinkelspiegel nach einem der vorhergehenden Ansprüche, **gekennzeichnet durch** zwei Abstrebungen (3), welche über ein Distanzelement (17) miteinander verbunden sind.

11. Verfahren zur Betätigung eines Klappwinkelspiegels für ein militärisches Fahrzeug mit einem um eine Schwenkachse (S) schwenkbaren Einblickspiegel (2), der insbesondere zwischen einer Einblickstellung (E) und einer Parkstellung (P₁, P₂) hin und her geschwenkt wird, und einer Abstrebung (3) zur Festlegung der Stellung des Einblickspiegels (2), wobei die Abstrebung (3) längenveränderbar ist,
**dadurch gekennzeichnet,**
**dass** ein an der als Teleskop-Element ausgebildeten Abstrebung (3) angeordnetes Klemmelement (14) in der Parkstellung (P₁, P₂) an dem Einblickspiegel (2) und in der Einblickstellung (E) an einer fahrzeugfesten Halterung (15) befestigt wird.

12. Ausblickvorrichtung zum Ausblick aus einem militärischen Fahrzeug mit einen Ausblickspiegel (10) und einem Klappwinkelspiegel (1) nach einem der Ansprüche 1 bis 10.

13. Ausblickvorrichtung nach Anspruch 12, **gekennzeichnet durch** eine fahrzeugfeste Halterung (15) zur Befestigung einer Abstrebung (3) eines Klappwinkelspiegels (1).

14. Fahrzeug, insbesondere militärisches Fahrzeug, mit einer Ausblickvorrichtung nach einem der Ansprüche 12 oder 13.

## Claims

1. Collapsible periscope for a military vehicle, having an insight mirror (2) that is pivotable about a pivot axis (S) and in particular pivotable in a reciprocating manner between an insight position (E) and a parking position (P₁, P₂), and a bracing structure (3) for determining the position of the insight mirror (2), wherein the bracing structure (3) is variable in length, **characterized in that**
the bracing structure (3) is configured as a telescopic element.

2. Collapsible periscope according to Claim 1, **characterized in that** the bracing structure (3) by way of a pivot point (SP) is connectable to a fixed point (12) that is locationally fixed on a vehicle.

3. Collapsible periscope according to one of the preceding claims, **characterized in that** the pivot angle (α) enclosed between the insight mirror (2) and the bracing (3) is smaller than 90 degrees, in particular smaller than 45 degrees.

4. Collapsible periscope according to one of the preceding claims, **characterized in that** the length of the bracing structure (3) is capable of being determined by way of a fixing device (7).

5. Collapsible periscope according to Claim 4, **characterized in that** the position of a piston portion (5) in a cylinder portion (6) is capable of being determined by the fixing device (7).

6. Collapsible periscope according to Claim 5, **characterized in that** the fixing device (7) has a rotary element (8) and a compression element (9), wherein the compression element (9) can exert a variable friction force on the piston portion (5), and wherein the friction force for determining the telescopic element is capable of being set by way of the rotary element (8).

7. Collapsible periscope according to one of the preceding claims,
**characterized in that** a clamping element (14) in particular an eccentric clamp, for fixing the insight mirror (2) in the insight position (E) is provided on at least one bracing structure (3).

8. Collapsible periscope according to Claim 7, **characterized in that** the clamping element (14) in the parking position (P₁, P₂) is fastenable to the insight mirror (2), and in the insight position (E) is fastenable to a mounting (15) that is fixed on a vehicle.

9. Collapsible periscope according to one of Claims 7 or 8,
**characterized in that** a mounting (16) that is fixed to the mirror is provided on the insight mirror (2) for fixing the clamping element (14) in the parking position (P₁, P₂).

10. Collapsible periscope according to one of the preceding claims,
**characterized by** two bracing structures (3) which are interconnected by way of a spacer element (17).

11. Method for activating a collapsible periscope for a military vehicle, having an insight mirror (2) that is pivotable about a pivot axis (S) and in particular is pivoted in a reciprocating manner between an insight position (E) and a parking position (P₁, P₂), and a bracing structure (3) for determining the position of the insight mirror (2), wherein the bracing structure (3) is variable in length,
**characterized in that**
a clamping element (14) that is disposed on the bracing structure (3), the latter being configured as a telescopic element, in the parking position (P₁, P₂) is fastened to the insight mirror (2), and in the insight position (E) is fastened to a mounting (15) that is fixed on a vehicle.

12. Vision device for looking out of a military vehicle, having an outlook mirror (10) and a collapsible periscope (1) according to one of Claims 1 to 10.

13. Vision device according to Claim 12,
**characterized by** a mounting (15), fixed to a vehicle, for fastening a bracing structure (3) of a collapsible periscope (1).

14. Vehicle, in particular a military vehicle, having a vision device according to one of Claims 12 or 13.

## Revendications

1. Périscope rabattable pour un véhicule militaire avec un miroir de vision (2) pouvant pivoter autour d'un axe de pivotement (S), qui peut en particulier pivoter réciproquement entre une position de vision (E) et une position de rangement (P₁, P₂), et un entretoisement (3) pour la fixation de la position du miroir de vision (2), dans lequel l'entretoisement (3) est de longueur variable, **caractérisé en ce que** l'entretoisement (3) est constitué par un élément télescopique.

2. Périscope rabattable selon la revendication 1, **caractérisé en ce que** l'entretoisement (3) peut être relié à un point fixe (12) du véhicule par l'intermédiaire d'un point de pivotement (SP).

3. Périscope rabattable selon l'une quelconque des revendications précédentes, **caractérisé en ce que** l'angle de pivotement (a) compris entre le miroir de vision (2) et l'entretoisement (3) est inférieur à 90 degrés, en particulier inférieur à 45 degrés.

4. Périscope rabattable selon l'une quelconque des revendications précédentes, **caractérisé en ce que** la longueur de l'entretoisement (3) peut être établir par un dispositif de fixation (7).

5. Périscope rabattable selon la revendication 4, **caractérisé en ce que** la position d'une partie de piston (5) peut être établir dans une partie de cylindre (6) par le dispositif de fixation (7).

6. Périscope rabattable selon la revendication 5, **caractérisé en ce que** le dispositif de fixation (7) présente un élément rotatif (8) et un élément de pression (9), dans lequel l'élément de pression (9) peut exercer une force de frottement variable sur la partie de piston (5) et dans lequel la force de frottement peut être réglée par l'élément rotatif (8) pour le blocage de l'élément télescopique.

7. Périscope rabattable selon l'une quelconque des revendications précédentes, **caractérisé en ce qu'**il est prévu sur au moins un entretoisement (3) un élément de serrage (14), en particulier un élément de serrage excentrique, pour la fixation du miroir de vision (2) dans la position de vision (E).

8. Périscope rabattable selon la revendication 7, **caractérisé en ce que** l'élément de serrage (14) dans la position de rangement (P₁, P₂) peut être fixé au miroir de vision (2) et dans la position de vision (E) à un support (15) solidaire du véhicule.

9. Périscope rabattable selon une des revendications 7 ou 8, **caractérisé en ce qu'**il est prévu sur le miroir de vision (2) un support (16) solidaire du miroir pour la fixation de l'élément de serrage (14) dans la position de rangement (P₁, P₂).

10. Périscope rabattable selon l'une quelconque des revendications précédentes, **caractérisé par** deux entretoisements (3), qui sont reliés l'un à l'autre par un élément d'écartement (17).

11. Procédé d'actionnement d'un périscope rabattable pour un véhicule militaire avec un miroir de vision (2) pouvant pivoter autour d'un axe de pivotement (S), que l'on fait pivoter réciproquement en particulier entre une position de vision (E) et une position de rangement (P₁, P₂), et un entretoisement (3) pour la fixation de la position du miroir de vision (2), dans lequel l'entretoisement (3) est de longueur variable, caractérisé en ce l'on fixe un élément de serrage (14) disposé sur l'entretoisement (3), constitué par un élément télescopique, dans la position de rangement (P₁, P₂) au miroir de vision (2) et dans la position de vision (E) à un support (15) solidaire du véhicule.

12. Dispositif d'observation pour regarder hors d'un véhicule militaire avec un miroir d'observation (10) et un périscope rabattable (1) selon l'une quelconque des revendications 1 à 10.

13. Dispositif d'observation selon la revendication 12, **caractérisé par** un support (15) solidaire du véhicule pour la fixation d'un entretoisement (3) d'un périscope rabattable (1).

14. Véhicule, en particulier véhicule militaire, doté d'un dispositif d'observation selon une des revendications 12 ou 13.
